# FASCICULE DE BREVET EUROPEEN

(11) **EP 3 050 138 B1**
(45) Date de publication et mention de la délivrance du brevet: **15.11.2017**
(21) Numéro de dépôt: 14780613.7
(22) Date de dépôt: 11.09.2014
(51) Int. Cl.: H01M 2/26, H01M 10/052, H01M 10/0587, H01M 2/02, H01M 2/30, H01M 2/36, H01M 10/04, H01M 4/131, H01M 4/485, H01M 4/505, H01M 4/525, H01M 10/0525, H01M 4/66

(54) **PROCÉDÉ DE RÉALISATION D'UN FAISCEAU ÉLECTROCHIMIQUE D'UN ACCUMULATEUR AU LITHIUM**
VERFAHREN ZUR HERSTELLUNG EINES ELEKTROCHEMISCHEN BÜNDELS EINER LITHIUMBATTERIE
METHOD FOR PRODUCING AN ELECTROCHEMICAL BUNDLE OF A LITHIUM BATTERY

(30) Priorité: 25.09.2013 FR 1359223
(43) Date de publication de la demande: 03.08.2016
(73) Titulaire: Commissariat à l'Énergie Atomique et aux Énergies Alternatives, 75015 Paris (FR)
(72) Inventeur: MASSON, Olivier, 38360 Sassenage (FR); DEWULF, Frédéric, F-38500 Voiron (FR); JOST, Pierre, F-38220 Saint-Pierre de Mesage (FR); LEYS, Come-Emmanuel, 38590 Sillans (FR)
(74) Mandataire: Nony
(86) Numéro de dépôt international: PCT/IB2014/064431
(87) Numéro de publication internationale: WO 2015/044820

(56) Documents cités:
- EP-A1- 1 983 595
- EP-A1- 2 061 106
- EP-A2- 1 134 819
- EP-A2- 1 255 310
- FR-A1- 2 921 195
- JP-A- 2010 257 851
- US-A1- 2006 024 572
- US-A1- 2011 076 547

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins une cellule électrochimique constituée d'une anode et d'une cathode de part et d'autre d'un séparateur imprégné d'électrolyte, deux collecteurs de courant dont un est relié à l'anode et l'autre à la cathode, et un boitier de forme allongée selon un axe longitudinal (X), le boitier étant agencé pour loger la cellule électrochimique avec étanchéité tout en étant traversé par une partie des collecteurs de courant formant les bornes de sortie, aussi appelés pôles.

Le séparateur peut être constitué d'un ou plusieurs films.

Le boitier peut comporter un couvercle et un conteneur, usuellement appelé godet, ou comporter un couvercle, un fond et une enveloppe latérale assemblée à la fois au fond et au couvercle,

La présente invention vise la réalisation d'une partie du raccordement électrique entre au moins une cellule électrochimique de l'accumulateur et ses bornes de sortie intégrées à son boitier.

### Art antérieur

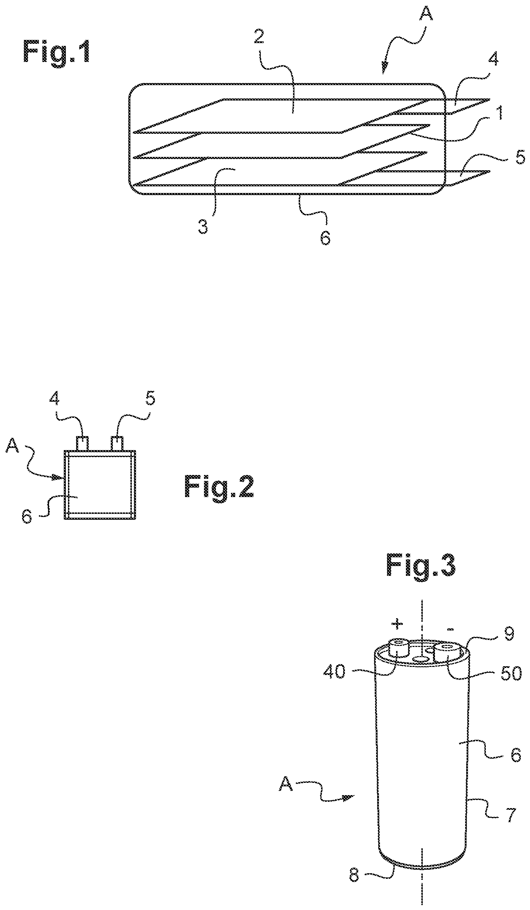

Telle qu'illustrée schématiquement en figures 1 et 2, une batterie ou accumulateur lithium-ion comporte usuellement au moins une cellule électrochimique C constituée d'un séparateur imprégné d' un constituant électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO₂.

L'électrode négative ou anode est très souvent constituée de carbone, graphite ou en Li₄TiO₅O₁₂ (matériau titanate), éventuellement également à base de silicium ou à base de lithium, ou à base d'étain et de leurs alliages ou de composite formé à base de silicium.

L'anode et la cathode en matériau d'insertion au Lithium peuvent être déposées selon une technique usuelle sous la forme d'une couche active sur une feuille métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension élevé, typiquement autour de 3,6 Volt.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10⁻⁶ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur Li-ion de forte capacité et à durée de vie supérieure à 10 ans, est illustré en figure 3.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

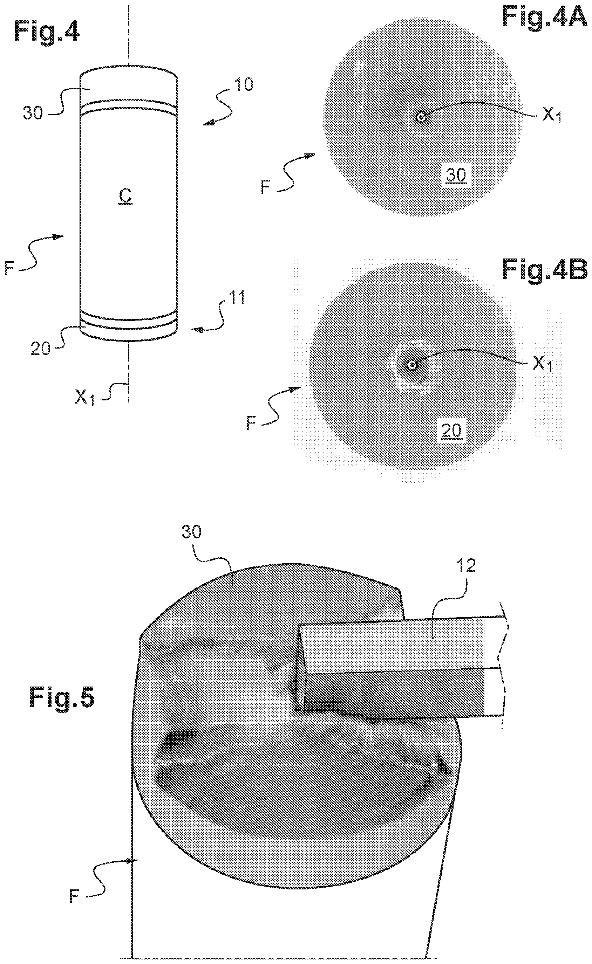

On a reproduit aux figures 4 à 4B les photographies d'un faisceau électrochimique F de forme allongée selon un axe longitudinal X1 et comportant une seule cellule électrochimique C telle qu'elle est usuellement enroulée par bobinage avant les étapes de logement dans un boitier, de raccordement électrique aux bornes de sortie de l'accumulateur et son imprégnation par un électrolyte. La cellule C est constituée d'une anode 3 et d'une cathode 4 de part et d'autre d'un séparateur (non visible) adapté pour être imprégné de l'électrolyte. Comme cela est visible, l'une 10 de ses extrémités latérales du faisceau F est délimitée par des bandes 30 de l'anode 3 non revêtues, tandis que l'autre 11 de ses extrémités latérales est délimitée par des bandes 20 de la cathode 2 non revêtues.

Par « bandes non revêtues », on entend ici et dans le cadre de l'invention, les portions des feuilles métalliques, aussi appelés feuillards, formant les collecteurs de courant, qui ne sont pas recouvertes d'un matériau d'insertion au lithium.

L'objectif des fabricants d'accumulateurs est d'augmenter l'autonomie d'une cellule constituant l'accumulateur ou leur aptitude à pouvoir fonctionner sous des régimes de puissance élevés tout en améliorant leur durée de vie, i.e. leur nombre de cycles possible, leur légèreté et les coûts de fabrication de ces composants.

Les voies d'améliorations des accumulateurs Li-ion concernent, majoritairement, la nature des matériaux et les méthodes d'élaboration des composants de cellule électrochimique.

D'autres voies d'améliorations possibles, moins nombreuses, concernent les boitiers d'accumulateurs et les méthodes et moyens de raccordement électrique d'un faisceau électrochimique aux deux bornes de sortie, aussi appelés terminaux ou encore, pôles de polarité différente de l'accumulateur.

A ce jour, lorsqu'on souhaite réaliser un raccordement électrique entre le faisceau électrochimique et les bornes de sortie d'un accumulateur Li-ion de géométrie cylindrique ou prismatique, qui soit de qualité, on vise à respecter au mieux les règles de conception suivantes:
- satisfaire aux besoins d'une application en conduction électrique entre chaque polarité d'électrodes et les bornes de sortie intégrées au boitier de l'accumulateur, par exemple en vue de répondre à des pics de puissance tout en limitant les échauffements internes à l'accumulateur susceptibles d'accélérer son vieillissement électrochimique ;
- minimiser le niveau de résistance interne global de l'accumulateur en réalisant le raccordement électrique directement sur les collecteurs de courant des électrodes pour chaque polarité et en connectant une pièce intermédiaire de raccordement entre le faisceau électrochimique et le boitier de l'accumulateur ;
- simplifier le raccordement au faisceau électrochimique, en réalisant le raccordement directement sur les bandes latérales non revêtue d'électrode, aussi appelées rives, délimitant respectivement les deux extrémités latérales opposées du faisceau;
- optimiser les caractéristiques (épaisseur, hauteur, masse) et profils des bandes latérales non revêtues d'électrodes pour réaliser ledit raccordement électrique, afin de satisfaire au mieux les étapes d'assemblage finales, c'est-à-dire les étapes d'intégration du faisceau électrochimique dans le boitier, de fermeture du boitier de l'accumulateur, de remplissage d'électrolyte....
- minimiser la masse et le volume nécessaires à la réalisation du raccord électrique qui en tant que tel n'est pas générateur d'énergie électrochimique, mais qui sont nécessaires au transfert de l'énergie par le faisceau électrochimique vers l'extérieur du boitier d'accumulateur.

Dans la littérature décrivant des solutions de réalisation de faisceau électrochimique d'un accumulateur de forme cylindrique ou prismatique et de son raccordement électrique aux bornes de sortie intégrées à son boitier, on peut citer les documents suivants.

Le brevet FR 2094491 divulgue un accumulateur alcalin dont le raccordement électrique entre la cellule électrochimique enroulée et bornes de sortie est obtenu par découpe des rives des électrodes par fentes espacées régulièrement puis, rabattement radial des rives ainsi fendues de l'extérieur de l'intérieur sous la forme d'écailles superposées afin de constituer un socle sensiblement plan sur lequel est enfin soudé un collecteur de courant, constitué le cas échéant par le couvercle du boitier.

La demande de brevet EP 1102337 divulgue un accumulateur Li-ion dont le raccordement électrique entre la cellule électrochimique enroulée et bornes de sortie est obtenu par un unique pressage de chaque extrémité des feuillards d'électrodes de la cellule enroulée, selon l'axe d'enroulement, au moyen d'un mandrin de pressage puis, par soudure au laser de chaque extrémité des feuillards d'électrodes avec un collecteur de courant terminal constitué par un clinquant sous la forme d'un disque et d'une languette de connexion elle-même soudée par laser par la suite au couvercle du boitier, à une extrémité et au fond de boitier, à l'autre extrémité. Des nervures sont réalisées chacune sur un diamètre du disque et sont elles-mêmes pressées au préalable de la soudure contre les extrémités de feuillards d'électrodes pressées.

La demande de brevet EP 1596449 décrit un accumulateur Li-ion dont le raccordement électrique entre la cellule électrochimique enroulée et bornes de sortie est obtenu tout d'abord par pressage multiple de chaque extrémité latérale délimitée par les bandes non revêtues d'électrodes de la cellule enroulée, au moyen d'un mandrin de pressage de diamètre extérieur compris entre 15 et 20 mm. Le mandrin de pressage se déplace selon une très faible course alternativement de l'extérieur vers l'intérieur de la cellule parallèlement à l'axe d'enroulement en balayant toute la surface latérale des bandes non revêtues d'électrodes pour réaliser un enchevêtrement entre ces derniers en formant un socle plan et dense sur lequel est soudé par laser ou par transparence un collecteur de courant terminal constitué par un clinquant sous la forme d'un bande de connexion plane elle-même soudée par laser ou par transparence par la suite à une borne de sortie intégrée au couvercle à une extrémité latérale et au fond de boitier, à l'autre extrémité latérale.

En analysant toutes les solutions connues de réalisation de faisceau électrochimique d'un accumulateur au lithium et de son raccordement électrique aux bornes de sortie de l'accumulateur, telles que décrites ci-dessus, les inventeurs sont parvenus à la conclusion que celles-ci étaient encore perfectibles sur de nombreux aspects.

Tout d'abord, la masse et le volume des bandes latérales non revêtues d'électrodes (rives) nécessaires au raccordement électrique avec les collecteurs de courant selon l'état de l'art ne sont pas nécessairement optimisés, ce qui implique au final une masse et un volume de l'accumulateur également non encore optimisés.

Ensuite, les inventeurs ont constaté que de facto les rives d'une même extrémité latérale n'étaient pas nécessairement raccordées électriquement entre elles, en particulier les parties de ces rives situées dans la zone la plus périphérique du faisceau. Cela implique une capacité spécifique réelle du faisceau électrochimique diminuée, ce qui peut être préjudiciable en particulier pour les applications de puissance élevée pour l'accumulateur.

Enfin, l'étape de remplissage d'électrolyte dans un faisceau électrochimique d'accumulateur au lithium, peut s'avérer relativement longue et délicate du fait que les collecteurs de courant selon l'état de l'art tels qu'ils sont soudés sur les rives de faisceau électrochimique d'accumulateur constituent un obstacle conséquent au passage de l'électrolyte.

Il existe donc un besoin d'améliorer la réalisation de faisceau électrochimique d'un accumulateur au lithium et de son raccordement électrique aux bornes de sortie de l'accumulateur, notamment en vue de diminuer la masse et volume du faisceau électrochimique nécessaires au raccordement électrique, d'augmenter la capacité spécifique réelle du faisceau, et en vue de rendre moins longue et délicate l'étape de remplissage par un électrolyte.

Le but de l'invention est de répondre au moins en partie à ce besoin.

### Exposé de l'invention

Pour ce faire, l'invention concerne, sous l'un de ses aspects, un procédé de réalisation d'un faisceau électrochimique (F) d'un accumulateur (A) au lithium, tel qu'un accumulateur Li-ion, en vue de son raccordement électrique aux bornes de sortie de l'accumulateur, comportant les étapes suivantes :
a/ fourniture d'un faisceau électrochimique comportant au moins une cellule électrochimique constituée d'une cathode et d'une anode de part et d'autre d'un séparateur adapté pour être imprégné d'un électrolyte, le faisceau ayant une forme allongée selon un axe longitudinal X1, avec à l'une de ses extrémités latérales, des bandes de l'anode non revêtues et à l'autre de ses extrémités latérales des bandes de la cathode non revêtues;
b/ rabattement avec déformation plastique, selon au moins une direction radiale à l'axe X1, d'une partie des bandes de l'extérieur vers l'intérieur du faisceau électrochimique, sur une partie de surface d'au moins une des extrémités latérale de sorte qu'au moins deux bandes consécutives se chevauchent dans leur partie rabattue et que les parties rabattues qui se chevauchent forment une surface sensiblement plane;
c/ tassage axial selon l'axe X1 des bandes du faisceau électrochimique, sur au moins la partie de surface de l'extrémité latérale non rabattue selon l'étape b/; le tassage axial étant réalisé à plusieurs reprises de sorte à obtenir sur la partie de surface tassée et non rabattue de l'extrémité latérale, un socle sensiblement plan, destiné à être soudé à un collecteur de courant.

Par « rabattement avec déformation plastique », on entend le sens usuel, c'est-à-dire un rabattement qui génère une déformation irréversible.

Ainsi, le procédé selon l'invention se caractérise par la combinaison de deux étapes de pliage d'un faisceau électrochimique d'accumulateur au lithium b/ et c/ distinctes dans leur mise en oeuvre qui permettent d'obtenir deux zones distinctes sur au moins une, de préférence chacune, des extrémités latérales du faisceau.

Ces deux zones distinctes concourent ensemble à améliorer le raccordement électrique à un collecteur de courant tout en diminuant la masse et le volume des bandes latérales non revêtues (rives) nécessaires.

Ainsi, les parties de bandes rabattues sont soudées entre elles, ce qui permet de s'assurer d'une distribution du courant électrique homogène de manière systématique et une meilleure capacité spécifique réelle du faisceau lors du fonctionnement de l'accumulateur. En effet, lorsqu'on soude entre elles les parties de bandes rabattues, on connecte ensemble sur une même ligne de raccordement électrique, de l'extérieur vers l'intérieur du faisceau, l'ensemble des spires d'enroulement des électrodes d'une même polarité au sein du faisceau. Ainsi, on multiplie les points de connexion électrique sur une extrémité latérale d'une même électrode sur toute sa surface et ce au plus près de la matière active d'insertion au lithium et, cela réduit d'autant les distances entre points de connexion sur la longueur de l'électrode.

Les parties de bande rabattues permettent également de conférer de la rigidité à une extrémité latérale du faisceau, ce qui facilite l'étape ultérieure de pose et soudure du collecteur de courant sur cette extrémité.

Les parties de bande tassées et qui n'ont pas été rabattues au préalable forment quant à elles le socle de raccordement proprement dit au collecteur de courant. Comme évoqué ci-avant, le socle est rigidifié par les parties de bandes rabattues. Les inventeurs ont pu constater qu'une forte densification des parties de bandes tassées est obtenue du fait de cette rigidification. Autrement dit, comparativement à une étape de tassage seule selon l'état de l'art, l'étape b/ de rabattement combinée à l'étape c/ de tassage axial contribue à augmenter la densification des parties de bandes en extrémité latérale.

Grâce à l'invention, il est donc possible, d'utiliser une masse et un volume moindres de bandes latérales d'électrode non revêtues et donc d'augmenter la capacité spécifique réelle du faisceau électrochimique.

Ainsi, selon l'invention, avec une très bonne connexion électrique entre elles des parties de bandes rabattues par soudure systématique et une forte densification des parties de bandes tassées, on peut augmenter de manière importante la capacité spécifique réelle du faisceau électrochimique d'un accumulateur au lithium.

Grâce à l'invention, les inventeurs pensent qu'il est possible d'augmenter la capacité spécifique d'un accumulateur Li-ion d'une valeur de l'ordre de 10 % comparativement à l'état de l'art.

Enfin, le socle de raccordement électrique obtenu conformément au procédé selon l'invention, se situe à distance des parties des bandes rabattues, c'est-à-dire surélevé par rapport à celles-ci. Cette différence de hauteur entre socle et parties de bandes rabattues crée donc un volume sans matière qui va faciliter et accélérer le passage de l'électrolyte dans le faisceau électrochimique lors de l'étape ultérieure d'injection d'électrolyte. Le socle sensiblement plan obtenu par le tassage axial selon l'étape c/ n'est pas nécessairement coplanaire avec la surface obtenue par le rabattement selon l'étape b/. Ainsi, en général, il existe une différence de hauteur entre le socle plan et la surface des parties rabattues. Cette différence de hauteur peut être comprise typiquement entre 0,2 et 2 mm.

Selon un mode de réalisation avantageux, le rabattement selon l'étape b/ et le tassage axial selon l'étape c/ sont réalisés à chacune des extrémités latérales.

L'épaisseur des parties de bandes rabattues sur une extrémité latérale peut être inférieure à 0,6 mm.

Selon une variante avantageuse, le tassage axial selon l'étape c/ est réalisé sur toute la surface d'une extrémité latérale du faisceau.

Selon un mode de réalisation avantageux, le faisceau électrochimique est constitué d'une seule cellule électrochimique enroulée sur elle-même par bobinage.

Selon un premier mode de rabattement, le rabattement selon l'étape b/ peut être réalisé selon au moins une droite passant par le centre de l'enroulement de la cellule.

Il peut ainsi être réalisé selon deux droites passant par le centre de l'enroulement de la cellule, les deux droites étant alignées l'une avec l'autre. De manière plus générale, il peut s'agir de deux droites passant par le centre et formant entre elles un angle compris entre de 150 et 210°.

Il peut également être réalisé selon trois droites passant par le centre de l'enroulement de la cellule, les trois droites étant espacées angulairement à 120° l'une avec l'autre. De manière plus générale, il peut s'agir de trois droites passant par le centre et formant entre elles un angle compris entre de 90 et 150°.

Il peut également être réalisé selon quatre droites passant par le centre de l'enroulement de la cellule, les quatre droites étant espacées angulairement à 90° l'une avec l'autre. De manière plus générale, il peut s'agir de quatre droites passant par le centre et formant entre elles un angle compris entre de 70 et 110°.

Selon un deuxième mode de rabattement, le rabattement selon l'étape b/ peut être réalisé selon au moins une droite ne passant pas par le centre de l'enroulement de la cellule.

Selon un mode de réalisation avantageux, on réalise une étape d/ de soudage entre elles des parties de bandes rabattues d'une même extrémité latérale.

De préférence, l'étape d/ de soudage est réalisée entre l'étape b/ de rabattement radial et l'étape c/ de tassage axial.

L'étape d/ de soudage peut consister en une soudure obtenue par soudage laser, électrique ou par ultrasons.

L'invention concerne également sous un autre de ses aspects, un procédé de réalisation d'une partie de raccordement électrique entre un faisceau électrochimique (F) d'un accumulateur (A) au lithium et l'une des bornes de sortie de l'accumulateur, comportant les étapes suivantes :
- réalisation d'un faisceau électrochimique (F) conformément au procédé qui vient d'être décrit;
- soudage entre elles des parties de bandes rabattues du faisceau électrochimique d'une même extrémité latérale selon l'étape d/;
- soudage du socle obtenu à un collecteur de courant lui-même destiné à être lié ou connecté électriquement à une borne de sortie de l'accumulateur.

Selon un mode de réalisation avantageux, l'étape d/ de soudage et l'étape de soudage du socle à un collecteur de courant sont réalisées simultanément.

De préférence, au préalable des étapes de soudage simultanées, on vient mettre en contact un collecteur de courant contre le socle, le collecteur de courant comportant :
- une ou plusieurs nervures de contact adaptées pour venir en contact contre le socle;
- une ou plusieurs ouvertures délimitées par des pattes de maintien adaptées pour maintenir les parties de bandes rabattues du faisceau électrochimique.

De préférence encore, les étapes de soudage simultanées étant réalisées par soudage laser.

L'invention a encore pour objet selon un autre de ses aspects, un collecteur de courant, spécialement destiné à la mise en oeuvre du procédé décrit ci-avant, comportant :
- une ou plusieurs nervures de contact adaptées pour venir en contact contre un socle formé par les parties de bandes tassées axialement et non rabattues d'une extrémité latérale d'un faisceau électrochimique;
- une ou plusieurs ouvertures délimitées par des pattes de maintien adaptées pour maintenir les parties de bandes rabattues de ladite extrémité latérale dudit faisceau électrochimique.

L'invention concerne enfin une batterie ou accumulateur au lithium-ion (Li-ion) comportant un boitier comportant :
- un fond auquel est soudé un des collecteurs de courant soudé au faisceau électrochimique conformément au procédé décrit précédemment ; et
- un couvercle avec une traversée formant une borne de sortie à laquelle est soudée l'autre des collecteurs de courant soudé au faisceau électrochimique conformément au procédé décrit précédemment.

De préférence :
- le matériau d'électrode(s) négative(s) est choisi dans le groupe comportant le graphite, le lithium, l'oxyde de titanate Li₄TiO₅O₁₂ ; ou à base de silicium ou à base de lithium, ou à base d'étain et de leurs alliages ;
- le matériau d'électrode(s) positive(s) est choisi dans le groupe comportant le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO₂.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage rigide constitué d'un boitier ;
- la figure 4 est une vue photographique en perspective d'un faisceau électrochimique d'un accumulateur lithium-ion selon l'état de l'art, le faisceau étant constitué d'une seule cellule électrochimique enroulée sur elle-même par bobinage;
- la figure 4A est une vue photographique de dessus d'une extrémité latérale du faisceau électrochimique selon la figure 4 ;
- la figure 4B est une vue photographique de dessus de l'autre extrémité latérale du faisceau électrochimique selon la figure 4 ;
- la figure 5 est une vue photographique en perspective d'un faisceau électrochimique d'un accumulateur lithium-ion selon l'invention, montrant la réalisation de l'étape de rabattement d'une des extrémités latérales du faisceau conformément au procédé selon l'invention ;
- la figure 6 est une vue photographique de dessus d'une extrémité latérale d'un faisceau sur laquelle l'étape de rabattement de la figure 5 a été réalisée ;
- la figure 6A est une vue photographique en coupe selon l'axe A-A du faisceau selon la figure 6 ;

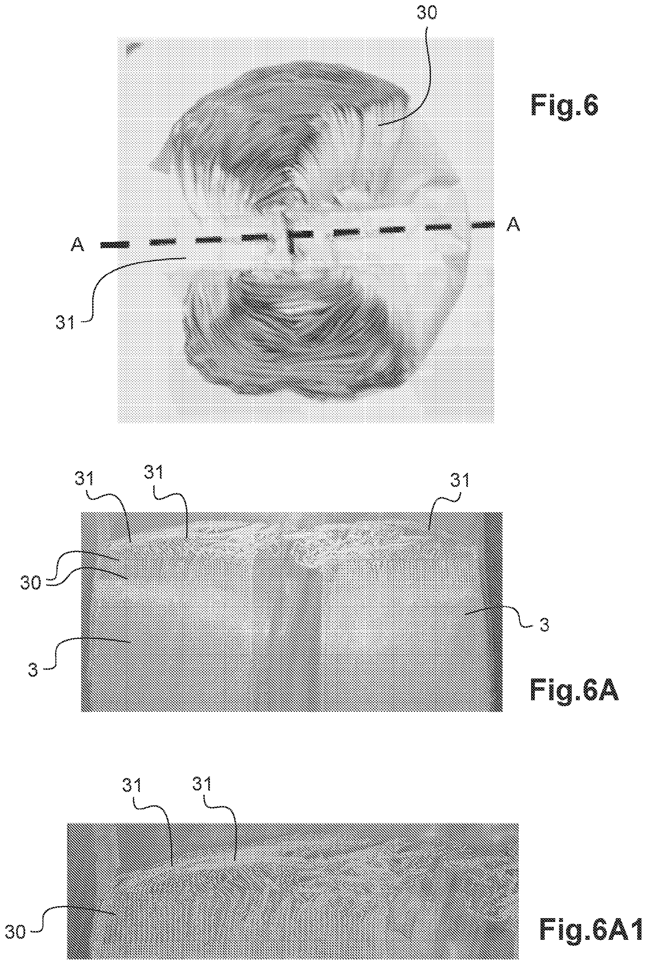

- la figure 6A1 est une vue photographique agrandie de la figure 6A ;

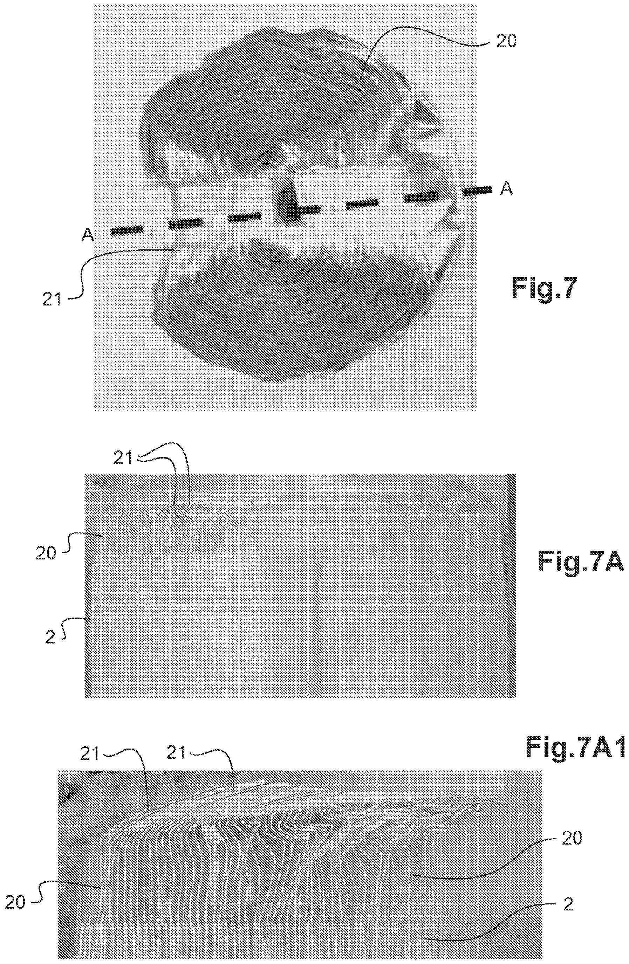

- la figure 7 est une vue photographique de dessus de l'autre extrémité latérale d'un faisceau sur laquelle l'étape de rabattement de la figure 5 a été réalisée ;
- la figure 7A est une vue photographique en coupe selon l'axe A-A du faisceau selon la figure 7 ;
- la figure 7A1 est une vue photographique agrandie de la figure 6A ;

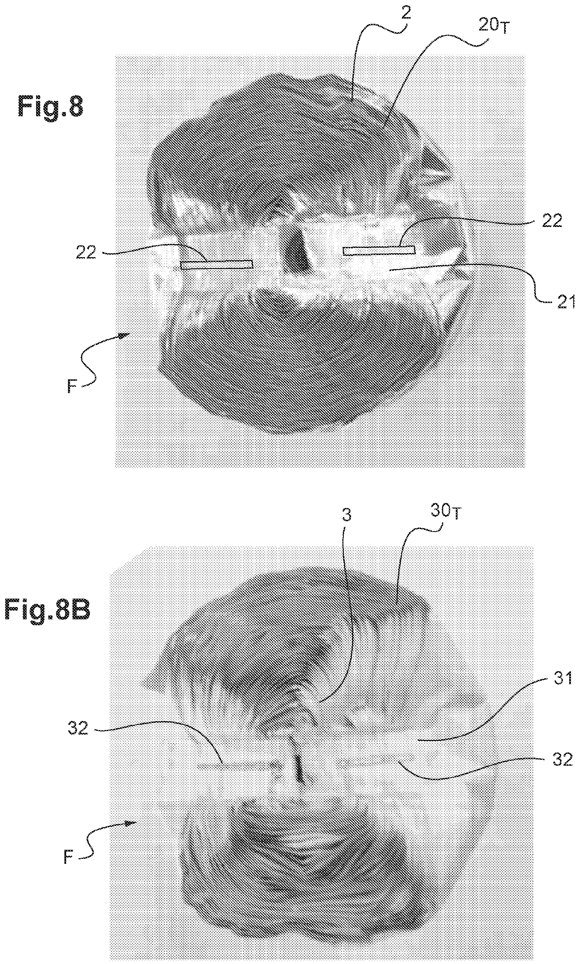

- les figures 8A et 8B sont des vues photographiques de dessus respectivement d'un faisceau selon les figures 6 et 7, avec les parties rabattues soudées entre elles par une soudure continue ;

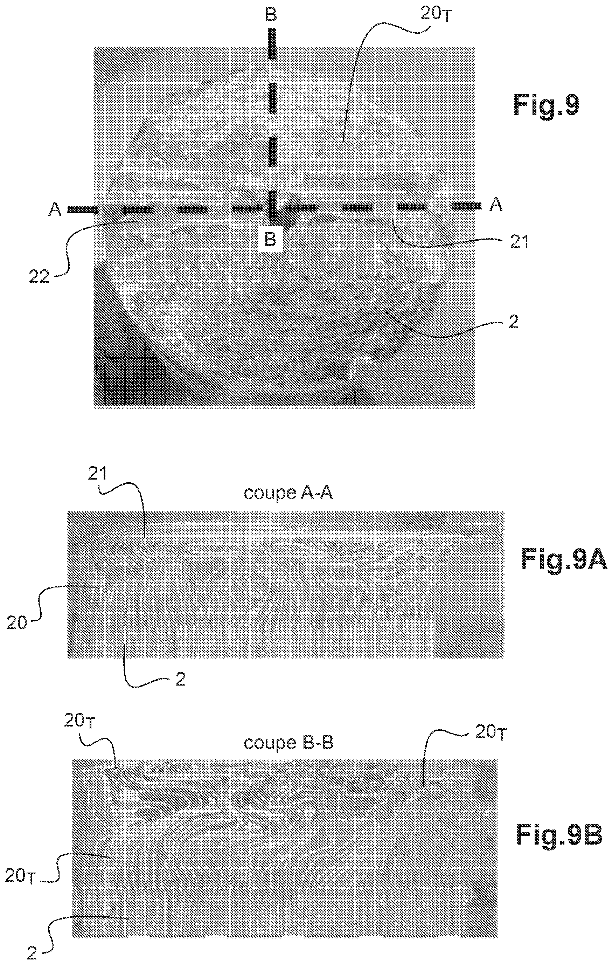

- la figure 9 est une vue photographique de dessus de l'extrémité latérale du faisceau selon la figure 8A, sur laquelle a été réalisée en outre l'étape de tassage axiale conformément au procédé selon l'invention ;
- la figure 9A est une vue photographique en coupe selon l'axe A-A du faisceau selon la figure 9 ;
- la figure 9B est une vue photographique en coupe selon l'axe B-B du faisceau selon la figure 9 ;

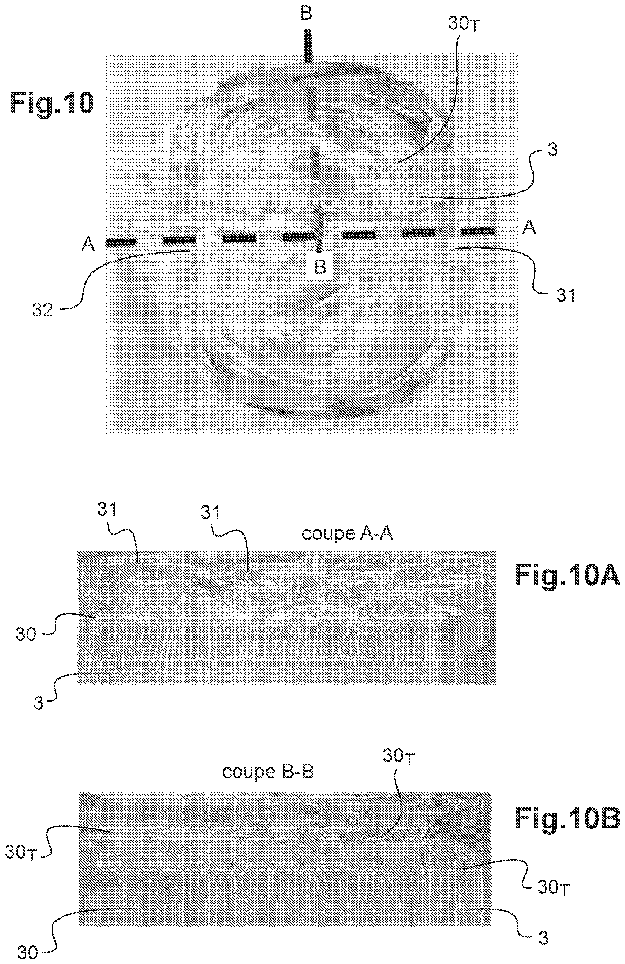

- la figure 10 est une vue photographique de dessus de l'extrémité latérale du faisceau selon la figure 8B, sur laquelle a été réalisée en outre l'étape de tassage axiale conformément au procédé selon l'invention ;
- la figure 10A est une vue photographique en coupe selon l'axe A-A du faisceau selon la figure 10;
- la figure 10B est une vue photographique en coupe selon l'axe B-B du faisceau selon la figure 10;

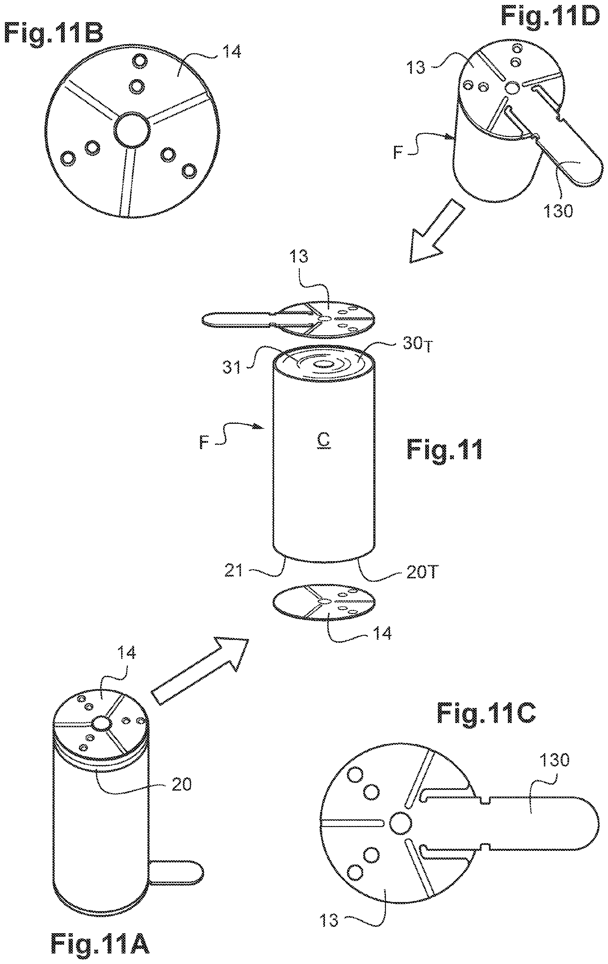

- les figures 11 et 11A à 11D sont des vues photographiques montrant en perspective et en vue de dessus chacun des deux collecteurs de courant soudé à l'une des extrémités latérales d'un faisceau réalisé conformément au procédé selon l'invention;

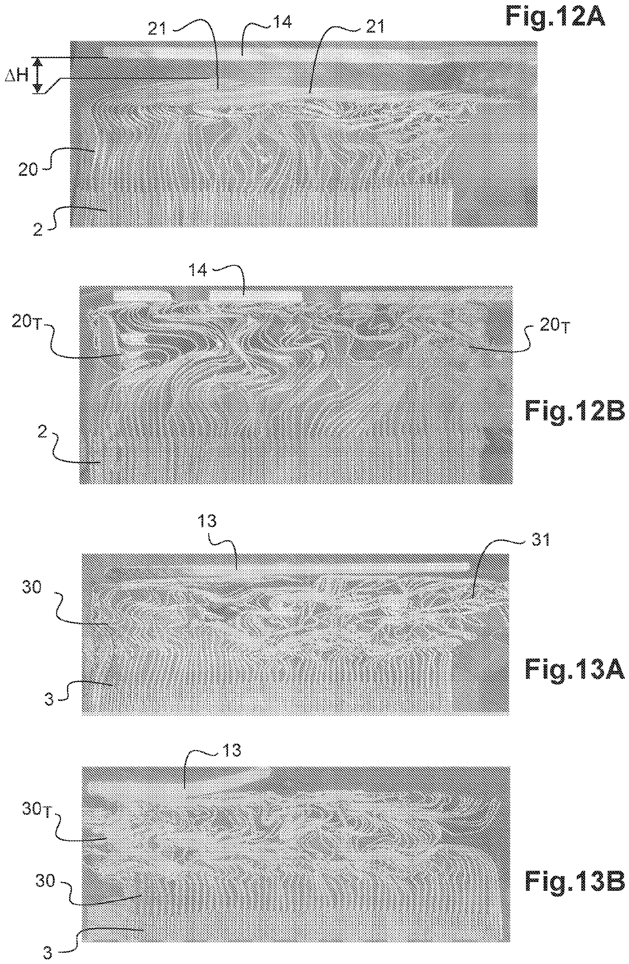

- les figures 12A et 12B sont des vues photographiques en vue de coupe montrant un des deux collecteurs de courant soudé à l'une des extrémités latérales d'un faisceau réalisé selon les figures 11 et 11A à 11D ;
- les figures 13A et 13B sont des vues photographiques en vue de coupe montrant l'autre des deux collecteurs de courant soudé à l'une des extrémités latérales d'un faisceau réalisé selon les figures 11 et 11A à 11D ;

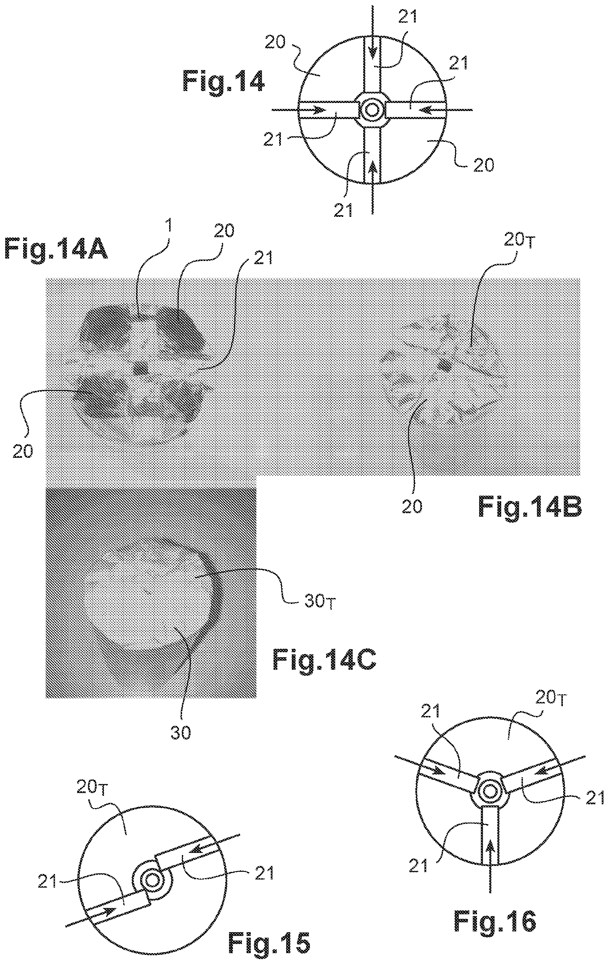

- la figure 14 est une vue schématique de dessus d'une extrémité latérale d'un faisceau réalisée selon une variante de l'étape de rabattement du procédé selon l'invention ;
- les figures 14A et 14B sont des vues photographiques en perspective d'une extrémité latérale d'un faisceau réalisée selon la variante de la figure 14, respectivement avant et après l'étape de tassage axial du procédé selon l'invention ;
- la figure 14C est une vue photographique en perspective de l'autre extrémité latérale d'un faisceau réalisée selon la variante de la figure 14, après l'étape de tassage axial du procédé selon l'invention ;
- les figures 15 et 16 sont des vues schématiques de dessus d'une extrémité latérale d'un faisceau réalisée selon deux autres variantes de l'étape de rabattement du procédé selon l'invention ;

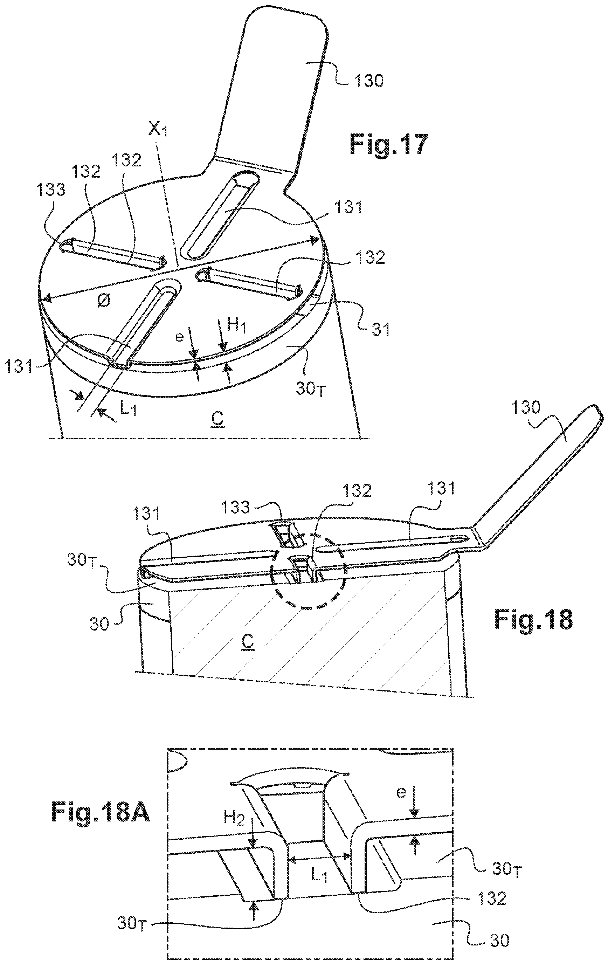

- la figure 17 est une vue en perspective d'un mode de réalisation de la partie de raccordement électrique entre le faisceau obtenu conformément au procédé selon l'invention et un collecteur de courant destiné lui-même à être raccordé électriquement à une borne de sortie de l'accumulateur ;
- la figure 18 est une vue en coupe longitudinale de la partie de raccordement électrique selon la figure 17 ;
- la figure 18A est une vue de détail de la figure 18 ;

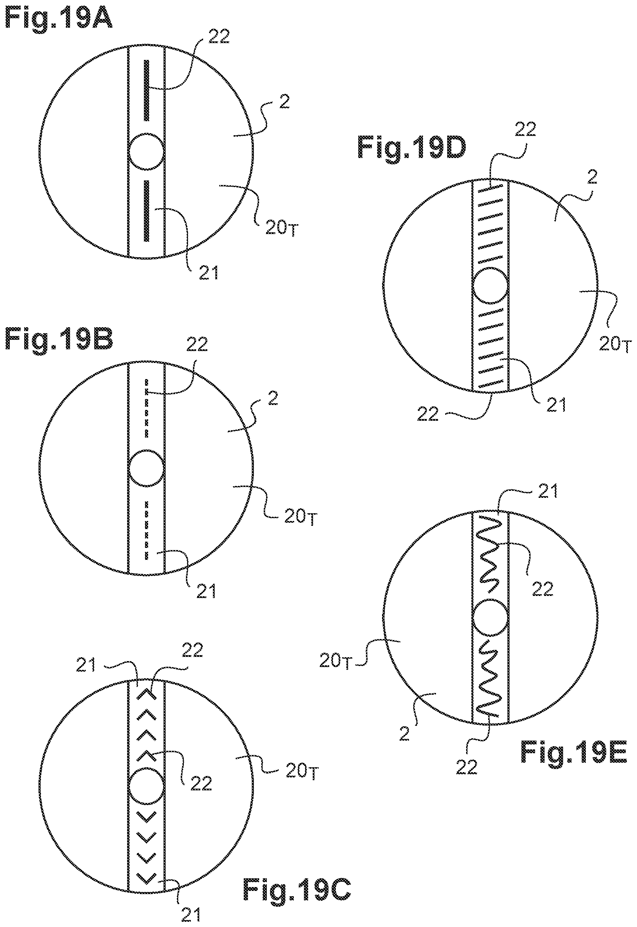

- les figures 19A à 19E sont des vues de dessus montrant les différentes variantes de soudure entre les parties rabattues d'un faisceau obtenu selon l'invention.

Par souci de clarté, les mêmes références désignant les mêmes éléments d'un accumulateur au lithium-ion selon l'état de l'art et selon l'invention sont utilisées pour toutes les figures 1 à 19E.

On précise que les différents éléments selon l'invention sont représentés uniquement par souci de clarté et qu'ils ne sont pas à l'échelle.

Les figures 1 à 4B ont déjà été commentées en détail en préambule. Elles ne sont donc pas décrites ci-après.

Pour améliorer le raccordement électrique entre un faisceau électrochimique d'un accumulateur Li-ion et ses bornes de sortie, les inventeurs proposent un nouveau procédé de réalisation du faisceau électrochimique.

Les feuillards métalliques supportant les matériaux d'électrodes peuvent avoir une épaisseur comprise entre 5 et 50 µm. Pour un feuillard d'anode 3, il peut s'agir avantageusement d'un feuillard en cuivre d'épaisseur de l'ordre de 12 µm. Pour un feuillard de cathode 2, il peut s'agir avantageusement d'un feuillard en aluminium d'épaisseur de l'ordre de 20 µm.

On décrit maintenant en référence aux figures 5 à 11 les différentes étapes de ce procédé de réalisation selon l'invention.

Etape a/: On enroule par bobinage l'anode, la cathode et au moins un film de séparateur de la cellule électrochimique C autour d'un support non représenté.

Le faisceau a donc une forme cylindrique allongée selon un axe longitudinal X1, avec à l'une 10 de ses extrémités latérales, des bandes 30 de l'anode 3 non revêtues et à l'autre 11 de ses extrémités latérales des bandes 20 de la cathode non revêtues. Le faisceau initial selon l'invention est donc comme celui montré aux figures 4 à 4B.

Etape b/: On réalise alors un rabattement avec déformation plastique, selon au moins une direction radiale à l'axe X1, d'une partie des bandes de l'extérieur vers l'intérieur du faisceau électrochimique F, sur une partie de surface de chaque extrémité latérale.

Le rabattement peut être effectué au moyen d'un barreau 12 par pivotement radialement au faisceau F comme montré en figure 5 sur l'extrémité latérale délimitée par les bandes 30 non revêtues d'anode.

Comme cela est clairement visible aux figures 6 à 6A1, à l'extrémité latérale 10 du faisceau F, on obtient alors une pluralité de bandes consécutives 30 d'anode qui se chevauchent dans leur partie rabattue 31 et les parties rabattues 31 qui se chevauchent forment une surface sensiblement plane.

Il en va de même à l'autre extrémité latérale 11 du faisceau F, avec la pluralité de bandes consécutives 20 de cathode qui se chevauchent dans leur partie rabattue 21 et les parties rabattues 21 qui se chevauchent forment une surface sensiblement plane (figures 7 à 7A1).

De préférence, l'épaisseur des parties de bandes rabattues 21 ou 31 sur une extrémité latérale 11 ou 10 est inférieure à 0,6 mm.

Etape c/ : On effectue alors un tassage axial selon l'axe X1 des bandes 20, 30 du faisceau électrochimique, sur toute la surface des extrémités latérales 10, 11.

Le tassage axial consiste en une compression par un outil plan ou structuré de surface d'appui sensiblement égale à la surface de chacune des extrémités latérales des bandes 20 ou 30.

Lorsque la géométrie recherchée de l'accumulateur est cylindrique, l'outil et le faisceau électrochimique sont disposés de manière coaxiale lors du tassage axial.

Le tassage axial est réalisé à une ou plusieurs reprises. Il peut consister en une compression suivant un ou plusieurs mouvements relatifs de va et vient, i.e. au moins un aller-retour selon l'axe X1 du faisceau, et ce jusqu'à atteindre soit une dimension voulue de faisceau suivant X1, soit un effort maximal de compression dont la valeur est prédéterminée au préalable.

On obtient ainsi sur la partie de surface tassée 20T, 30T et non rabattue de chaque extrémité latérale, un socle sensiblement plan, destiné à être soudé à un collecteur de courant.

Ainsi, comme cela est clairement visible aux figures 10 à 10B, à l'extrémité latérale 10 du faisceau F, on obtient :
- sur une partie de sa surface, une pluralité de bandes consécutives 30 d'anode qui se chevauchent dans leur partie rabattue 31 et les parties rabattues 31 qui se chevauchent forment une surface sensiblement plane ;
- sur l'autre partie de sa surface, une partie de bandes 30 avec une surface tassée 30T et non rabattue qui forment un socle sensiblement plan, destiné à être soudé à un collecteur de courant.

Il en va de même à l'autre extrémité latérale 11 du faisceau F, avec :
- sur une partie de sa surface, la pluralité de bandes consécutives 20 de cathode qui se chevauchent dans leur partie rabattue 21 et les parties rabattues 21 qui se chevauchent forment une surface sensiblement plane ;
- sur l'autre partie de sa surface, une partie de bandes 20 avec une surface tassée 20T et non rabattue qui forment un socle sensiblement plan, destiné à être soudé à un collecteur de courant (figures 9 à 9B).

Comme mieux visible en figures 12A et 12B, les deux parties de surface ne sont pas forcément coplanaires. La partie de surface rabattue 21 sensiblement plane est en général située sur un plan inférieur à celui du socle plan délimité sur la partie de surface tassée 20T. La différence de hauteur ΔH entre ces deux parties de surface 20T, 21 peut être comprise entre 0,2 et 2 mm.

Etape d/ : on réalise le soudage entre elles des parties de bandes rabattues 21 ou 31 d'une même extrémité latérale 11 ou 10.

Selon un premier mode de réalisation avantageux, cette étape de soudage d/ est réalisée entre l'étape b/ de rabattement radial et l'étape c/ de tassage axial qui viennent d'être décrite.

Comme visible aux figures 8A et 8B, les parties rabattues 31 ou 21 peuvent être ainsi avantageusement soudées entre elles au moyen d'une soudure continue 32 ou 22.

Selon ce premier mode de réalisation, on soude alors à l'une des extrémités latérales 11 du faisceau, le socle formé par la partie tassée 20T de la cathode (rives positives) avec un collecteur de courant 14 usuel sous la forme d'un disque plein, lui-même destiné à être soudé par la suite avec le fond 8 du boitier 6 d'accumulateur (figures 11, 11A, 11B).

On procède de la même manière à l'autre des extrémités latérales 10 du faisceau, le socle formé par la partie tassée 30T de l'anode (rives négatives) avec une partie de collecteur de courant 13 usuel sous la forme d'un disque plein percé en son centre et d'une languette 130 faisant saillie latéralement du disque 13 (figure 11, 11C, 11D).

De manière alternative, selon un deuxième mode de réalisation, l'étape d/ de soudage et l'étape de soudage de chacun des socles sont réalisées simultanément au moyen d'un collecteur de courant spécialement adapté, après l'étape c/.

Tel qu'illustré aux figures 17 à 18A, le collecteur de courant 13 spécialement adapté, de préférence en aluminium ou en cuivre, comporte tout d'abord des nervures de contact 131 adaptées pour venir en contact contre un socle formé par la partie tassée 30T des bandes 30 d'anode. Il comporte également des ouvertures délimitées par des pattes de maintien 132 adaptées pour maintenir les parties de bandes rabattues 31. Comme illustré, les nervures 131 et les pattes de maintien 132 sont réalisées d'un même côté du disque du collecteur 13 ou autrement dit font saillie depuis une même face principale du disque 13.

De préférence, les ouvertures délimitées par les pattes de maintien 132 sont fermées à leur périphérie 133.

A titre d'exemple, le collecteur de courant 13 présente un diamètre Ø est compris entre 1 et 10 cm, une épaisseur de plaque e comprise entre 0,2 et 1,2 mm, les nervures de contact 131 présentent une hauteur H1 comprise entre 0,1 et 2 mm, une largeur L1 comprise entre 0,5 et 10 mm, et les pattes de maintien 132 une hauteur H2 comprise entre 0,2 et 2 mm et définissent deux à deux des ouvertures d'une largeur comprise entre 1 et 10 mm.

Ainsi, avant la réalisation des soudures, on vient positionner, c'est-à-dire mettre en contact le collecteur de courant 13 contre l'extrémité latérale 10, avec les pattes 132 qui maintiennent rabattues les parties de bandes 31 et avec les nervures 131 en contact contre le socle formé par la partie tassée 30T (figures 17 à 18A) sans engendrer de déformation plastique supplémentaire du socle 30T.

Les nervures 131 ont ainsi pour fonction outre d'amener de la rigidité au collecteur 13, de localiser précisément la mise en contact entre le collecteur 13 et la partie tassées 30T.

On réalise alors les lignes de soudure continues d'une part, sur les nervures 131 afin de souder entre eux le collecteur 13 et la partie tassée 30T et d'autre part, à travers les ouvertures délimitées par les pattes 132 afin de souder entre elles les parties maintenues rabattues 31.

Lors du soudage, les nervures 131 facilitent l'évacuation de la chaleur à la périphérie du cordon de soudure.

Quel que soit le mode de réalisation choisi pour les soudures précitées, pour finaliser la réalisation définitive de l'accumulateur, on procède comme usuellement.

Ainsi, bien que non représenté, on introduit le faisceau avec le collecteur 13 dans un récipient rigide en aluminium formant uniquement l'enveloppe latérale 7 du boitier 6. On veille en particulier lors de cette étape à ce que la languette 130 ne gêne pas l'introduction. Pour ce faire, on replie celle-ci avantageusement vers le haut.

On soude le collecteur 14 avec le fond 8 du boitier 6.

On soude le collecteur 13 à un pôle négatif 50 formant une traversée d'un couvercle 9 de boitier 6.

On soude alors le couvercle 9 au récipient rigide métallique 7.

Puis on effectue une étape de remplissage du boitier 6 à l'aide d'un électrolyte, au travers d'une ouverture débouchante non représentée qui est pratiquée dans le couvercle 9.

Selon l'invention, du fait de la surélévation entre le socle formé par la partie 30T tassée et les parties rabattues 31, le remplissage de l'électrolyte est facilité et plus rapide.

La réalisation de l'accumulateur Li-ion selon l'invention prend fin par le bouchage de l'ouverture de remplissage.

D'autres variantes et améliorations peuvent être apportées sans pour autant sortir du cadre de l'invention.

Ainsi, par exemple, à titre de variantes, bien que dans les modes de réalisation illustrés qui viennent d'être détaillés les parties rabattues 21 ou 31 le sont selon deux droites passant par le centre de l'enroulement de la cellule C et alignées l'une avec l'autre, on peut envisager des réalisations avec des parties rabattues selon d'autres directions radiales.

Par exemple, on peut ainsi envisager un rabattement :
- soit selon quatre droites 21 ou 31 passant par le centre de l'enroulement de la cellule, les quatre droites étant espacées angulairement à 90° l'une avec l'autre (figures 14 à 14C) ;
- soit selon trois droites 21 ou 31 passant par le centre de l'enroulement de la cellule, les trois droites étant espacées angulairement à 120° l'une avec l'autre (figure 15) ;
- soit deux droites 21 ou 31 ne passant pas par le centre de l'enroulement de la cellule (figure 16).

Par ailleurs, à titre de variantes, bien que dans les modes de réalisation illustrés qui viennent d'être détaillés, les soudures entre les parties rabattues 21 ou 31 sont des soudures continues 22 ou 32 (figure 19A), on peut envisager des soudures 22 ou 32 discontinues selon différentes formes, telles que droites discontinues (figure 19B), chevrons (figure 19C), segments inclinés (figure 19D) ou en zigzag (figure 19E).

Enfin, bien que le boitier 6 dans les modes de réalisation illustrés qui viennent d'être détaillés soit en aluminium, il peut également être en acier, ou en acier nickelé. Dans une telle variante, un boitier en acier ou en acier nickelé constitue le potentiel négatif, la traversée 9 constituant alors le pôle positif.

L'invention n'est pas limitée aux exemples qui viennent d'être décrits ; on peut notamment combiner entre elles des caractéristiques des exemples illustrés au sein de variantes non illustrées.

## Revendications

1. Procédé de réalisation d'un faisceau électrochimique (F) d'un accumulateur (A) au lithium, tel qu'un accumulateur Li-ion, en vue de son raccordement électrique aux bornes de sortie de l'accumulateur, comportant les étapes suivantes :
a/ fourniture d'un faisceau électrochimique (F) comportant au moins une cellule électrochimique (C) constituée d'une cathode (2) et d'une anode (3) de part et d'autre d'un séparateur (4) adapté pour être imprégné d'un électrolyte, le faisceau ayant une forme allongée selon un axe longitudinal X1, avec à l'une (10) de ses extrémités latérales, des bandes (30) de l'anode non revêtues et à l'autre (11) de ses extrémités latérales des bandes (20) de la cathode non revêtues;
b/ rabattement avec déformation plastique, selon au moins une direction radiale à l'axe X1, d'une partie des bandes de l'extérieur vers l'intérieur du faisceau électrochimique, sur une partie de surface d'au moins une des extrémités latérales de sorte qu'au moins deux bandes consécutives se chevauchent dans leur partie rabattue (21, 31) et que les parties rabattues qui se chevauchent forment une surface sensiblement plane;
c/ tassage axial selon l'axe X1 des bandes (20, 30) du faisceau électrochimique, sur au moins la partie de surface de l'extrémité latérale non rabattue selon l'étape b/; le tassage axial étant réalisé à plusieurs reprises de sorte à obtenir sur la partie de surface tassée et non rabattue de l'extrémité latérale, un socle sensiblement plan, destiné à être soudé à un collecteur de courant.

2. Procédé de réalisation d'un faisceau électrochimique selon la revendication 1, le rabattement selon l'étape b/ et le tassage axial selon l'étape c/ étant réalisés à chacune des extrémités latérales (10, 11).

3. Procédé de réalisation d'un faisceau électrochimique selon la revendication 1 ou 2, l'épaisseur des parties de bandes rabattues (21, 31) sur une extrémité latérale (10, 11) est inférieure à 0,6 mm.

4. Procédé de réalisation d'un faisceau électrochimique selon l'une des revendications précédentes, le tassage axial selon l'étape c/ étant réalisé sur toute la surface d'une extrémité latérale du faisceau.

5. Procédé de réalisation d'un faisceau électrochimique selon l'une des revendications précédentes, le faisceau électrochimique étant constitué d'une seule cellule électrochimique enroulée sur elle-même par bobinage.

6. Procédé de réalisation d'un faisceau électrochimique selon la revendication 5, le rabattement selon l'étape b/ étant réalisé selon au moins une droite (21, 31) passant par le centre de l'enroulement de la cellule.

7. Procédé de réalisation d'un faisceau électrochimique selon la revendication 5, le rabattement selon l'étape b/ étant réalisé selon au moins une droite (21, 32) ne passant pas par le centre de l'enroulement de la cellule.

8. Procédé de réalisation d'un faisceau électrochimique selon l'une des revendications précédentes, selon lequel on réalise une étape d/ de soudage entre elles (22, 32) des parties de bandes rabattues (21, 31) d'une même extrémité latérale (11, 10).

9. Procédé de réalisation d'un faisceau électrochimique selon la revendication 8, l'étape d/ de soudage étant réalisée entre l'étape b/ de rabattement radial et l'étape c/ de tassage axial.

10. Procédé de réalisation d'une partie de raccordement électrique entre un faisceau électrochimique (F) d'un accumulateur (A) au lithium et l'une des bornes de sortie de l'accumulateur, comportant les étapes suivantes :
- réalisation d'un faisceau électrochimique (F) conformément au procédé selon l'une des revendications 1 à 7;
- soudage entre elles des parties de bandes rabattues (21, 31) du faisceau électrochimique d'une même extrémité latérale selon l'étape d/ selon la revendication 8 ;
- soudage du socle (20T, 30T) obtenu à un collecteur de courant (13, 14) lui-même destiné à être lié ou connecté électriquement à une borne de sortie (40, 50) de l'accumulateur.

11. Procédé de réalisation d'une partie de raccordement électrique selon la revendication 10, selon lequel l'étape d/ de soudage et l'étape de soudage du socle à un collecteur de courant sont réalisées simultanément.

12. Procédé de réalisation d'une partie de raccordement électrique selon la revendication 11, au préalable des étapes de soudage simultanées, on vient mettre en contact un collecteur de courant (13, 14) contre le socle, le collecteur de courant comportant :
- une ou plusieurs nervures de contact (131) adaptées pour venir en contact contre le socle;
- une ou plusieurs ouvertures délimitées par des pattes de maintien (132) adaptées pour maintenir les parties de bandes rabattues du faisceau électrochimique.

13. Collecteur de courant, spécialement destiné à la mise en oeuvre du procédé selon l'une des revendications 10 à 12, comportant :
- une ou plusieurs nervures de contact (131) adaptées pour venir en contact contre un socle formé par les parties de bandes tassées axialement et non rabattues d'une extrémité latérale d'un faisceau électrochimique;
- - une ou plusieurs ouvertures délimitées par des pattes de maintien (132) adaptées pour maintenir les parties de bandes rabattues de ladite extrémité latérale dudit faisceau électrochimique.

14. Batterie ou accumulateur au lithium-ion (Li-ion) comportant un boitier (10) comportant :
- un fond auquel est soudé un des collecteurs de courant soudé au faisceau électrochimique conformément au procédé selon l'une des revendications 10 à 12 ; et
- un couvercle (3) avec une traversée (1) formant une borne de sortie à laquelle est soudée l'autre des collecteurs de courant soudé au faisceau électrochimique conformément au procédé selon l'une des revendications 10 à 12.

15. Batterie ou accumulateur Li-ion selon la revendication 14, dans laquelle :
- le matériau d'électrode(s) négative(s) est choisi dans le groupe comportant le graphite, le lithium, l'oxyde de titanate Li₄TiO₅O₁₂ ; ou à base de silicium ou à base de lithium, ou à base d'étain et de leurs alliages ;
- le matériau d'électrode(s) positive(s) est choisi dans le groupe comportant le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO₂.

## Patentansprüche

1. Verfahren zur Herstellung eines elektrochemischen Bündels (F) eines Lithiumakkumulators (A), wie etwa eines Lithium-Ionenakkumulators, im Hinblick auf seinen elektrischen Anschluss an Ausgangsklemmen des Akkumulators, mit den folgenden Schritten:
a/ Bereitstellen eines elektrochemischen Bündels (F), das wenigstens eine elektrochemische Zelle (C) aufweist, die gebildet wird durch eine Kathode (2) und eine Anode (3) beiderseits eines Separators (4), der dazu eingerichtet ist, mit einem Elektrolyten getränkt zu werden, wobei das Bündel eine längs einer Längsachse X1 langgestreckte Form hat, mit nicht beschichteten Elektrodenbändern (30) an einem (10) seiner seitlichen Enden und mit nicht beschichteten Kathodenbändern (20) an dem anderen (11) seiner seitlichen Enden;
b/ Eintiefen unter plastischer Verformung, in wenigstens einer zu der Achse X1 radialen Richtung, eines Teils der Bänder vom Äußeren zum Inneren des elektrochemischen Bündels, auf einen Oberflächenbereich wenigstens eines der seitlichen Enden derart, dass wenigstens zwei aufeinanderfolgende Bänder sich auf ihrem eingetieften Teil (21, 31) überlappen und die eingetieften Teile, die sich überlappen, eine im wesentlichen ebene Oberfläche bilden;
c/ axiales Zusammendrücken der Bänder (20, 30) des elektrochemischen Bündels längs der Achse X auf wenigstens einem Teil der Oberfläche des seitlichen Endes, der in Schritt b/ nicht eingetieft wurde, wobei das axiale Zusammendrücken in mehreren Stufen erfolgt, derart, dass man auf dem zusammengedrückten und nicht eingetieften Teil der Oberfläche des seitlichen Endes einen im wesentlichen ebenen Sockel erhält, der dazu bestimmt ist, an einen Stromkollektor angelötet oder angeschweißt zu werden.

2. Verfahren nach Anspruch 1, bei dem das Eintiefen gemäß b/ und das axiale Zusammendrücken gemäß Schritt c/ an jedem der seitlichen Enden (10, 11) erfolgt.

3. Verfahren nach Anspruch 1 oder 2, bei dem die Dicke der eingetieften Teile der Bänder (21, 33) an einem seitlichen Ende (10, 11) kleiner als 0,6 mm ist.

4. Verfahren nach einem der vorstehenden Ansprüche, bei dem das axiale Zusammendrücken in Schritt c/ auf der gesamten Oberfläche eines seitlichen Endes des Bündels erfolgt.

5. Verfahren nach einem der vorstehenden Ansprüche, bei dem das elektrochemische Bündel durch eine einzige elektrochemische Zelle gebildet wird, die durch Aufspulen auf sich selbst gewickelt ist.

6. Verfahren nach Anspruch 5, bei dem das Eintiefen in Schritt b/ längs wenigstens einer Geraden (21, 33) erfolgt, die durch die Mitte des Wickels der Zelle hindurchgeht.

7. Verfahren nach Anspruch 5, bei dem das Eintiefen gemäß Schritt b/ längs wenigstens einer Geraden (21, 32) erfolgt, die nicht durch die Mitte des Wickels der Zelle hindurchgeht.

8. Verfahren nach einem der vorstehenden Ansprüche, bei dem ein Schritt d/ des miteinander Verschweißens oder Verlötens der eingetieften Teile (21, 33) desselben seitlichen Endes (11, 10) ausgeführt wird.

9. Verfahren nach Anspruch 8, bei dem der Schritt d/ des Verschweißens oder Verlötens zwischen dem Schritt b/ des radialen Eintiefens und dem Schritt c/ des axialen Zusammendrückens erfolgt.

10. Verfahren zur Bildung eines elektrischen Anschlussteils zwischen einem elektrochemischen Bündel (F) eines Lithiumakkumulators (A) und einer der Ausgangsklemmen des Akkumulators, mit den folgenden Schritten:
- Herstellen eines elektrochemischen Bündels (F) nach dem Verfahren gemäß einem der Ansprüche 1 bis 7;
- miteinander verschweißen oder verlöten der eingetieften Teile (21, 33) des elektrochemischen Bündels desselben seitlichen Endes gemäß Schritt d/ in Anspruch 8;
- Anschweißen oder Anlöten des erhaltenen Sockels (20T, 30T) an einen Stromkollektor (13, 14), der seinerseits dazu bestimmt ist, an eine Ausgangsklemme (40, 50) des Akkumulators angeschlossen oder damit elektrisch verbunden zu werden.

11. Verfahren zur Herstellung eines elektrischen Anschlussteils nach Anspruch 10, bei dem der Schritt d/ des Lötens oder Schweißens und der Schritt des Anlötens oder Anschweißens des Sockels an einen Stromkollektor gleichzeitig ausgeführt werden.

12. Verfahren zur Herstellung eines elektrischen Anschlussanteils gemäß Anspruch 11, bei dem vor den gleichzeitig ausgeführten Löt- oder Schweißschritten ein Stromkollektor (13, 14) mit dem Sockel in Kontakt gebracht wird, wobei der Stromkollektor aufweist:
- eine oder mehrere Kontaktrippen (131), die dazu eingerichtet sind, an dem Sockel in Kontakt zu kommen;
- eine oder mehrere Öffnungen, die durch Haltelaschen (132) begrenzt werden, die dazu eingerichtet sind, die eingetieften Teile der Bänder des elektrochemischen Bündels zu halten.

13. Stromkollektor, speziell bestimmt zur Ausführung des Verfahrens nach einem der Ansprüche 10 bis 12, mit:
- einer oder mehreren Kontaktrippen (131), die dazu eingerichtet sind, an einem Sockel in Kontakt zu kommen, der durch die axial zusammengerückten und nicht eingetieften Teile der Bänder eines seitlichen Endes des elektrochemischen Bündels gebildet wird;
- einer oder mehreren Öffnungen, die durch Haltelaschen (132) begrenzt werden, die dazu eingerichtet sind, die eingetieften Teile des Bandes dieses seitlichen Endes des elektrochemischen Bündels zu halten.

14. Batterie oder Lithiumionenakkumulator mit einem Gehäuse (10), der aufweist:
- einen Boden, an den einer der Stromkollektoren angelötet oder angeschweißt ist, der in dem Verfahren gemäß einem der Ansprüche 10 bis 12 mit dem elektrochemischen Bündel verlötet oder verschweißt wurde; und
- einen Deckel (3) mit einer Durchführung (1), die eine Ausgangsklemme bildet, an die der andere der Stromkollektoren angelötet oder angeschweißt ist, der in dem Verfahren gemäß einem der Ansprüche 10 bis 12 mit dem elektrochemischen Bündel verlötet oder verschweißt wurde.

15. Batterie oder Lithiumionenakkumulator nach Anspruch 14, bei dem:
- das Material der negativen Elektrode oder Elektroden ausgewählt ist aus der Gruppe, die umfasst: Graphit, Lithium, Titanoxid, Li₄TiO₅O₁₂, oder auf Siliziumbasis oder Lithiumbasis oder auf der Basis von Zinn und seinen Legierungen;
- das Material der positiven Elektrode oder Elektroden ausgewählt ist aus der Gruppe, die umfasst: Lithium-Eisenphosphat LiFePO₄, Lithium-Kobaltoxid LiCoO₂, Lithium-Manganoxid, gegebenenfalls substituiert, LiMn₂O₄ oder ein Material auf der Basis von LiNiₓMn_{y}Co_{z}O₂ mit x+y+z = 1, wie etwa LiNi_{0,33}Mn_{0,33}Co_{0,33}O₂, oder ein Material auf der Basis von LiNiₓCo_{y}AL_{z}O₂ mit x+y+z = 1, LiMn₂O₄, LiNiMnCoO₂ oder Nickel-Kobalt-Aluminium-Lithiumoxid LiNiCoAlO₂.

## Claims

1. A process for producing an electrochemical bundle (F) of a lithium accumulator (A), such as a Li-ion accumulator, with a view to its electrical connection to the output terminals of the accumulator, including the following steps:
a/ providing an electrochemical bundle (F) including at least one electrochemical cell (C) consisting of a cathode (2) and an anode (3) on either side of a separator (4) suitable for being impregnated with an electrolyte, the bundle having a shape that is elongate along a longitudinal axis X1, having, at one (10) of its lateral ends, anode bands (30) that are not coated and, at the other (11) of its lateral ends, cathode bands (20) that are not coated;
b/ folding with plastic deformation, at least in a direction radial to the axis X1, a portion of the bands from the exterior to the interior of the electrochemical bundle, onto an area portion of at least one of the lateral ends so that at least two consecutive bands overlap in their folded portion (21, 31) and so that the folded portions that overlap form a substantially flat area; and
c/ axial tamping along the axis X1 of the bands (20, 30) of the electrochemical bundle, of at least the area portion of the lateral end that is not folded in step b/, the axial tamping being carried out repeatedly so as to obtain in the tamped and not folded area portion of the lateral end, a substantially flat plinth intended to be welded to a current collector.

2. The process for producing an electrochemical bundle as claimed in claim 1, the folding in step b/ and the axial tamping in step c/ being carried out at each of the lateral ends (10, 11).

3. The process for producing an electrochemical bundle as claimed in claim 1 or 2, the thickness of the band portions (21, 31) folded onto a lateral end (10, 11) being smaller than 0.6 mm.

4. The process for producing an electrochemical bundle as claimed in one of the preceding claims, the axial tamping in step c/ being carried out on the entire area of a lateral end of the bundle.

5. The process for producing an electrochemical bundle as claimed in one of the preceding claims, the electrochemical bundle consisting of a single electrochemical cell being wound upon itself by spooling.

6. The process for producing an electrochemical bundle as claimed in claim 5, the folding in step b/ being carried out along at least one straight line (21, 31) passing through the center of the roll of the cell.

7. The process for producing an electrochemical bundle as claimed in claim 5, the folding in step b/ being carried out along at least one straight line (21, 32) not passing through the center of the roll of the cell.

8. The process for producing an electrochemical bundle as claimed in one of the preceding claims, in which a step d/ is carried out of welding together (22, 32) folded band portions (21, 31) of a given lateral end (11, 10).

9. The process for producing an electrochemical bundle as claimed in claim 8, the welding step d/ being carried out between the step b/ of radial folding and the step c/ of axial tamping.

10. A process for producing an electrical connection portion between an electrochemical bundle (F) of a lithium accumulator (A) and one of the output terminals of the accumulator, including the following steps:
- producing an electrochemical bundle (F) according to the process as claimed in one of claims 1 to 7;
- welding together folded band portions (21, 31) of the electrochemical bundle of a given lateral end according to step d/ as claimed in claim 8; and
- welding the plinth (20T, 30T) obtained to a current collector (13, 14) itself intended to be electrically connected or coupled to an output terminal (40, 50) of the accumulator.

11. The process for producing an electrical connection portion as claimed in claim 10, in which the welding step d/ and the step of welding the plinth to a current collector are carried out simultaneously.

12. The process for producing an electrical connection portion as claimed in claim 11, prior to the simultaneous welding steps, a current collector (13, 14) is brought into contact against the plinth, the current collector including:
- one or more contact ribs (131) suitable for making contact against the plinth; and
- one or more apertures bounded by holding tabs (132) suitable for holding in place the folded band portions of the electrochemical bundle.

13. A current collector, especially intended to be employed in the process as claimed in one of claims 10 to 12, including:
- one or more contact ribs (131) suitable for making contact against a plinth formed by the axially tamped and not folded band portions of a lateral end of an electrochemical bundle; and
- one or more apertures bounded by holding tabs (132) suitable for holding in place the folded band portions of said lateral end of said electrochemical bundle.

14. A lithium-ion (Li-ion) battery or accumulator including a casing (10) including:
- a bottom to which is welded one of the current collectors welded to the electrochemical bundle according to the process as claimed in one of claims 10 to 12; and
- a cover (3) with a feedthrough (1) forming an output terminal to which is welded the other of the current collectors welded to the electrochemical bundle according to the process as claimed in one of claims 10 to 12.

15. The Li-ion battery or accumulator as claimed in claim 14, in which:
- the material of the negative electrode(s) is chosen from the group including graphite, lithium, titanate oxide Li₄TiO₅O₁₂; or based on silicon or based on lithium, or based on tin and alloys thereof; and
- the material of the positive electrode(s) is chosen from the group including lithium iron phosphate LiFePO₄, lithium cobalt oxide LiCoO₂, optionally substituted lithium manganese oxide LiMn₂O₄ or a material based on LiNiₓMn_{y}Co_{z}O₂ where x+y+z = 1, such as LiNi_{0.33}Mn_{0.33}Co_{0.33}O₂, or a material based on LiNiₓCo_{y}Al_{z}O₂ where x+y+z = 1, LiMn₂O₄, LiNiMnCoO₂ or lithium nickel cobalt aluminum oxide LiNiCoAlO₂.
